# EUROPEAN PATENT APPLICATION

(11) **EP 3 488 957 A1**
(43) Date of publication of application: **29.05.2019**
(21) Application number: 18207428.6
(22) Date of filing: 21.11.2018
(51) Int. Cl.: B23D 61/02, B23D 65/00

(54) **METHODS OF PRODUCING SAW BLADES**

(30) Priority: 24.11.2017 SE 1751448
(71) Applicant: Swedex AB, 595 35 Mjölby (SE)
(72) Inventor: Strand, Markus, 582 28 Linköping (SE)
(74) Representative: AWA Sweden AB

(57) **Abstract**

The present disclosure provides a method of producing a saw blade (10), comprising providing a saw blade blank, comprising a circular blade base body (100) with radially extending teeth (101), said teeth being in an initial position, in a first bending step, bending at least some of the teeth (101), such that the teeth are plastically deformed, towards an axial direction (A) of the saw blade blank, to an intermediate axial position (N'), and in a second, subsequent, bending step, bending said at least some of the teeth (101), such that the teeth are plastically deformed, towards an opposite axial direction (-A) of the saw blade blank, such that the teeth arrive at a final axial setting position (N"). In the method, the intermediate axial position (N') is axially beyond the final axial setting position (N").

## Description

### Technical field

The present disclosure relates to a saw blade for use in circular saws, in particular for cutting wood. A particular application includes devices for cutting fresh wood or live trees, plants or bushes, such as in brush cutters.

### Background

Brush cutters are well known as such. There are many different types of cutting arrangements that can be used for brush cutters, such as flexible wires (made of plastic or metal), essentially straight blades, various three- or four pointed star-shaped cutters and cutters having the general appearance of a circular saw blade.

The present disclosure relates to the latter category of brush cutter saw blades.

The teeth may be alternatingly set towards opposite axial directions of the saw blade, such that each tooth presents a respective tooth plane, which is angled relative to a base body plane. Hence, there is an axial distance between the cutting edge and the blade base body, which reduces the risk of the saw blade being clamped by the material that is being cut.

During operation, the saw blade becomes worn, whereby, inter alia, cutting edges on the saw blade become dulled. In consequence, axially acting cutting forces arise, which cause the setting of the teeth to become reversed, i.e. the teeth are bent back towards a position where the teeth planes almost coincide with the base body plane.

Hence, it is necessary to re-establish the tooth setting, in order to maintain productivity, and in some cases to enable continued cutting operation. The re-establishment of the tooth setting is normally done by hand, tooth by tooth, using a setting tool, having a template to assist the operator to achieve a proper tooth setting.

However, the re-establishment operation is difficult and time-consuming, as every tooth on the saw blade must be re-set individually, as a separate step.

Hence, there is a need for solutions which increase the uptime of a saw blade.

### Summary

It is an object of the present disclosure to provide a saw blade having increased uptime, and in particular a saw blade that is suitable for cutting wood and in particular for applications such as brush cutters.

The invention is defined by the appended independent claim, with embodiments being set forth in the appended dependent claims, in the following description and in the drawings.

According to a first aspect, there is provided a method of producing a saw blade. The method comprises providing a saw blade blank, comprising a circular blade base body with radially extending teeth, said teeth being in an initial position in a first bending step, bending at least some of the teeth, such that the teeth are plastically deformed, towards a first axial direction of the saw blade blank, to an intermediate axial position, and in a second, subsequent, bending step, bending said at least some of the teeth, such that the teeth are plastically deformed, towards a second, opposite, axial direction of the saw blade blank, such that the teeth arrive at a final axial setting position, wherein the intermediate axial position is axially beyond the final axial setting position.

A saw blade blank is a piece of material that has been adapted for forming a saw blade. The blank may be substantially flat and with teeth at least initially formed, with e.g. a sharpening operation remaining to be done at a later stage. The blank may or may not have been modified to provide a hole, recess, protrusion or other structure for facilitating mounting of the saw blade in a saw blade mount.

The term "bending... such that the teeth are plastically deformed", means that the teeth at the end of the bending step have obtained a permanent position, and that this is the position at which the second bending step would start. Hence, any elastic return deformation in either direction is not to be understood as a bending operation.

Hence, instead of achieving a situation of residual stresses which cooperate with the axial forces exerted externally on the saw blade during use, that cause the saw blade to become planar, a situation of residual stresses can be achieved, which to a lesser degree works towards the saw blade becoming planar, or even a situation of residual stresses that to some degree counteract the saw blade becoming planar.

In such a saw blade, there is an axial distance between the cutting edge and the blade base body, which reduces the risk of the saw blade being clamped by the material that is being cut.

Moreover, subsequent re-setting of the tooth is facilitated.

In the initial position, the teeth may be coplanar.

The final axial setting position may be on the same axial side of the saw blade blank as the intermediate position.

The first bending step may provide a position of an outermost edge of the saw blade of 1 -2.5 mm, preferably 1.3-1.9 mm or 1.5-1.7 mm axially from the initial position.

The second bending step may provide a position of an outermost edge of the saw blade of 0.3-1.5 mm, preferably 0.7-1.3 mm or 0.8-1.2 mm axially from the initial position.

Each tooth may be bent such that a plane of the blade base body and a plane of the tooth meet at a bending angle.

In the method, a first subset of the teeth of the saw blade blank may be set towards a first axial direction according to the method as claimed in any one of the preceding claims, and a second subset of the teeth of the saw blade blank may be set towards a second, opposite, axial direction according to the method as claimed in any one of the preceding claims, wherein, as seen along a direction of rotation, the teeth belong to alternating ones of the first and second subsets.

Hence, there is provided a method for producing a saw blade having radially extending teeth, which are alternatingly set towards opposite axial directions of the saw blade, such that each tooth presents a respective tooth plane, which is angled relative to a base body plane.

According to a second aspect, there is provided a method of producing a saw blade, comprising providing a saw blade blank having a circular blade base body with radially extending teeth, said teeth being in an initial position, in a bending step, bending at least some of the teeth, such that the teeth are plastically deformed, towards an axial direction of the saw blade blank, to final axial position, whereby each tooth is bent such that a plane of the blade base body and a plane of the tooth meet at a bending angle, processing the blade base body locally at an area of the bending angle by heating or mechanical impact.

The processing may be provided on an axial side of the saw blade blank, which faces opposite the axial direction towards which the tooth has been bent.

### Brief description of the drawings

Figs 1a-1c show various aspects of a brush cutter and a sawblade for a brush cutter.
Fig 2 schematically illustrates a setting tool 2.
Fig. 3 schematically illustrate a partial view of a saw blade 10.
Fig. 4 schematically illustrate a partial view of a saw blade 10.
Figs 5a and 5b schematically illustrate partial views of a saw blade 10 during different stages of a production process.
Figs 6a and 6b schematically illustrate partial views of saw blades 10 during production.

### Detailed description

In the present disclosure, the invention is described with reference to a brush cutter, and to the production of a saw blade that is suitable for use in such a brush cutter. It is understood, however, that production of saw blades for other uses is not excluded, such as, but not limited to, in stationary or portable circular saws, and in particular for applications including the cutting of wood.

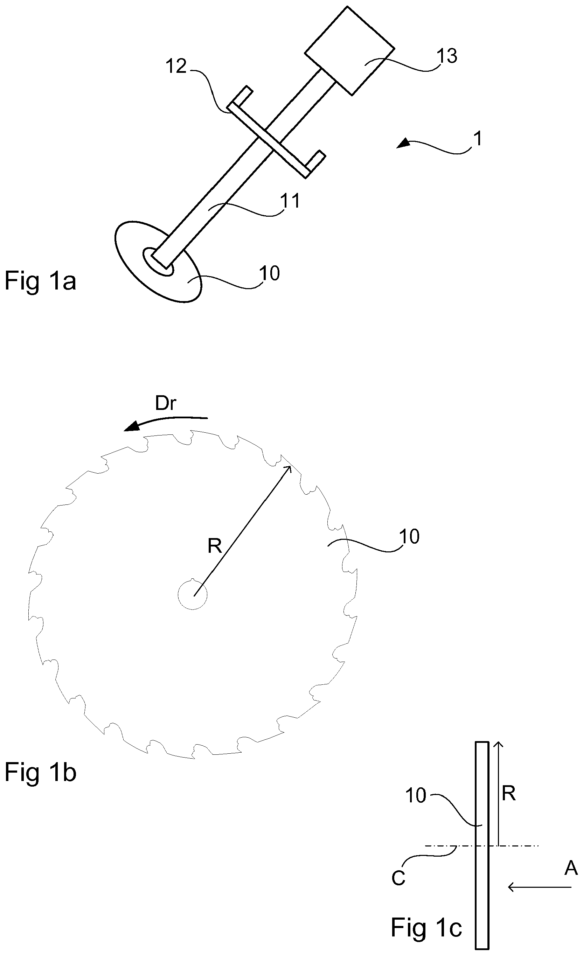

Fig. 1a schematically illustrates a brush cutter 1, comprising a saw blade 10, a frame 11, a handle 12 and a drive unit 13. The brush cutter is typically connected to the user by a harness worn by the user, such that the weight of the machine is transferred to the user's shoulders. The saw blade 10 is arranged at one end of the elongate frame 11 and the drive unit 13 is often arranged at the other end of the elongate frame 11, such that the weight of the saw blade 10, the saw blade connector and the forward part of the frame 11 are balanced by the drive unit 13.

The drive unit 13 may comprise an internal combustion engine ("ICE"), typically petrol powered, or an electric motor, which may be powered by battery or via a cord connected to a power grid or to a power generator.

Fig. 1b schematically illustrates the saw blade 10 in a side view, defining the radial direction R. and the direction Dr of rotation of the saw blade.

Fig. 1c schematically illustrates the saw blade 10 in sectional view, defining the axis of rotation C, about which the saw blade is to rotate, the radial direction R and an axial direction A, which is parallel with the axis of rotation and perpendicular to the radial direction R.

Typically, saw blades for ICE powered brush cutters may have teeth that are axially set by 0.7-1.4 mm, preferably 0.9-1.3 mm and saw blades for electrically powered brush cutters may be axial set by 0.6-1.2 mm, preferably 0.8-0.9 mm.

The blade base body may present a hardness of 35-45 HRC, preferably 42-44 HRC.

A total diameter of the saw blade may be 150-300 mm, preferably 200-250 mm or 200-225 mm.

The teeth may extend 5-15 mm, preferably 8-12 mm, radially.

The saw blade blank may be formed by a thin, flat sheet of metal, which may be annealed or otherwise hardened, entirely or locally, to provide a desired compromise between rigidity, flexibility and hardness. Stainless steel or spring steel, which may be stainless, may be used.

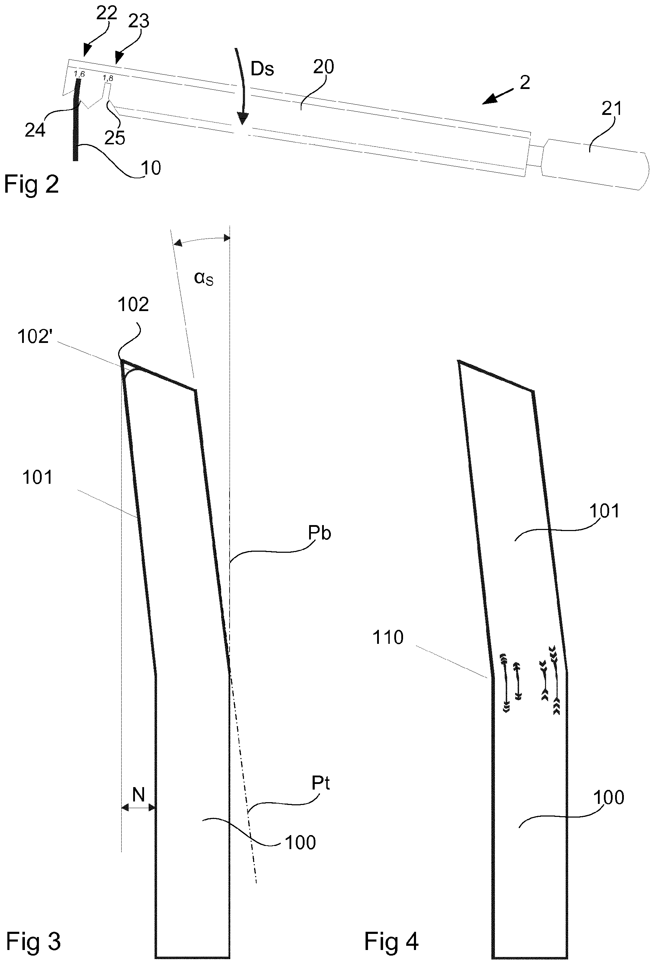

Fig. 2 schematically illustrates a setting tool 2 engaging a saw blade 10. The setting tool 2 comprises an elongate tool body 20, a handle 21 arranged at one end of the body and a number of setting grooves 22, 23, each associated with a predetermined saw blade thickness. The setting grooves 22, 23 have a respective bending edge 24, 25.

The setting tool 2 may be caused to engage a tooth 101 of a sawblade, preferably with a snug fit, through the matching of the groove width to the saw blade thickness. While holding the saw blade steadily, the tool is turned in direction Ds about the bending edge 24, 25. The bending edge may be associated with a template edge (not illustrated), which can limit the bending, such that each tooth 101 is bent only to a desired setting.

This process is repeated for each tooth 101.

For a saw blade with tooth sets that are set towards opposite axial directions, the process is typically performed for every second tooth towards one of the tool faces, and then for every second tooth towards the other tool face.

Referring to Fig. 3, there is illustrated a partial sectional view of a saw blade 10, presenting a saw blade base body 100 and a tooth 101 having a cutting edge 102 at a radially outermost portion thereof. The tooth 101 is set relative to the base body, such that a plane Pt of the tooth and a plane Pb of the base body meet at an angle αs. Moreover, in Fig. 3, the axial extent N of the cutting edge 102, as a consequence of the setting of the tooth 101, is illustrated.

In Fig. 3, it is illustrated how the cutting edge 102', when worn, becomes dulled and thus rounded, rather than sharp.

In Fig. 4, it is illustrated how, at a bending zone 110, in the area where the tooth plane Pt and the body plane Pb meet, residual stresses are formed in material of the blade following a prior art setting operation.

At the face of the bending zone towards which the tooth has been set, the residual stresses act to cause the tooth to return to the planar position it would have had prior to the initial setting operation. That is, residual compressive stresses are created at this face.

Similarly, at the opposite face of the bending zone, the residual stresses act in the opposite direction, as illustrated, but towards the same consequence, i.e. returning the tooth to the planar position. That is, residual tensile stresses are created at this face.

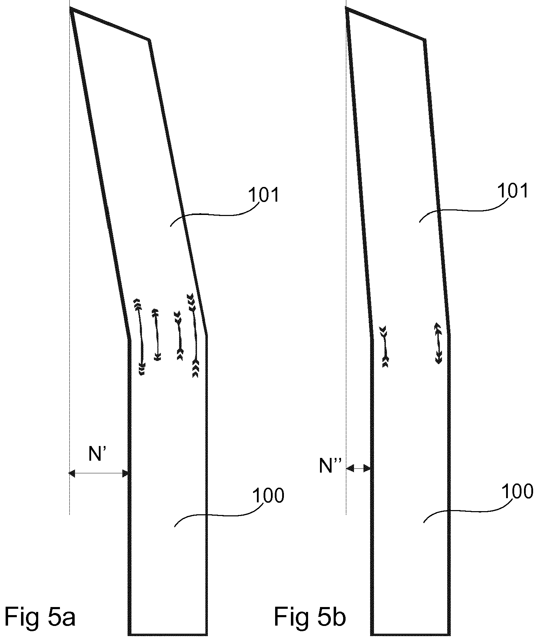

Referring to Figs 5a and 5b, there is illustrated a method of producing a saw blade, comprising performing a first bending step of the tooth, whereby the tooth 101 is bent axially to an intermediate position N', as illustrated in Fig. 5a, and then bent in the opposite axial direction to a final position N", as illustrated in Fig. 5b.

Referring to Fig. 5a, after this first bending situation, the residual stresses will be as illustrated in Fig. 4, i.e. operating towards returning the tooth to the position it had prior to the first bending step.

At this point, the material may be allowed to relax, such that no external axial forces act on the tooth 101.

The first intermediate positon N' is positioned axially beyond the intended final position N". That is, N' > N".

For example, this over setting may provide an axial position N' of 1-2.5 mm, preferably 1.3-1.9 mm or 1.5-1.7 mm.

Referring to Fig. 5b, in a second bending step, the tooth 101 is bent "back" and to its intended axial position N", which may be 0.3-1.5 mm, preferably 0.7-1.3 or 0.8-1.2 mm.

That is, the over setting (N'/N") may be approximately 65-850%, preferably 100-400 % or 130-300 %.

The second bending step provides a different situation with regard to residual stresses. Instead of the residual stresses operating to return the tooth to the initial, typically planar, position, the residual stresses will instead operate towards the direction of the setting.

The bending may be performed tooth by tooth, manually or through an automated process. Alternatively, a die assembly may be used, which enables all teeth of a saw blade to be bent in a single pressing operation. Hence, in the method disclosed above, it is possible to use a first die assembly for the first bending operation and another die assembly for the second bending operation. Alternatively, it is possible to use a single die assembly, which can be reconfigured between bending operations.

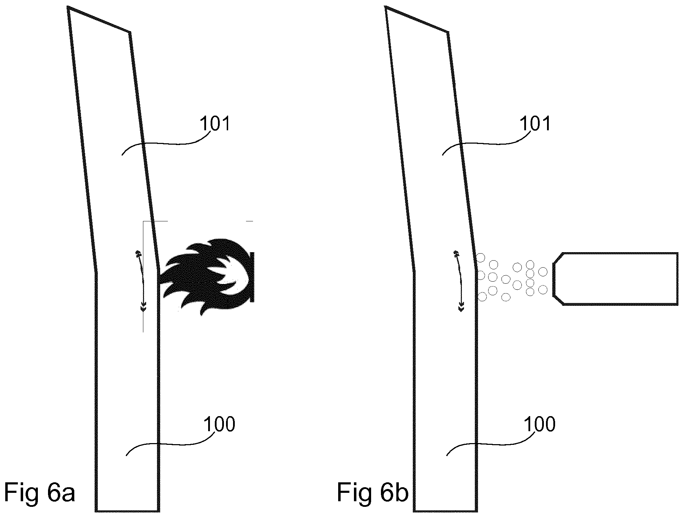

Figs 6a and 6b schematically illustrate alternative processes which have the potential of providing similar results.

In Fig. 6a, there is illustrated how the bending zone 110 may be heat treated after bending in only one direction, to alter the residual stresses.

Similarly, in Fig. 6b, there is illustrated how the surface at the bending zone 110 may be mechanically treated, such as by blasting, shot peening or hammering.

## Claims

1. A method of producing a saw blade (10), comprising:
providing a saw blade blank, comprising a circular blade base body (100) with radially extending teeth (101), said teeth being in an initial position,
in a first bending step, bending at least some of the teeth (101), such that the teeth are plastically deformed, towards a first axial direction (A) of the saw blade blank, to an intermediate axial position (N'), and
in a second, subsequent, bending step, bending said at least some of the teeth (101), such that the teeth are plastically deformed, towards a second, opposite, axial direction (-A) of the saw blade blank, such that the teeth arrive at a final axial setting position (N"),
wherein the intermediate axial position (N') is axially beyond the final axial setting position (N").

2. The method as claimed in claim 1, wherein, in the initial position, the teeth (101) are coplanar.

3. The method as claimed in any one of the preceding claims, wherein the final axial setting position (N") is on the same axial side of the saw blade blank as the intermediate position (N').

4. The method as claimed in any one of the preceding claims, wherein the first bending step provides a position of an outermost edge (102) of the saw blade of 1 -2.5 mm, preferably 1.3-1.9 mm or 1.5-1.7 mm axially from the initial position.

5. The method as claimed in any one of the preceding claims, wherein the second bending step provides a position of an outermost edge (102) of the saw blade of 0.3-1.5 mm, preferably 0.7-1.3 mm or 0.8-1.2 mm axially from the initial position.

6. The method as claimed in any one of the preceding claims, wherein each tooth (101) is bent such that a plane (Pb) of the blade base body (100) and a plane of the tooth (Pt) meet at a bending angle (αs).

7. The method as claimed in any one of the preceding claims, wherein a first subset of the teeth (101) of the saw blade blank are set towards a first axial direction (A) according to the method as claimed in any one of the preceding claims, and
wherein a second subset of the teeth of the saw blade blank are set towards a second, opposite, axial direction (-A) according to the method as claimed in any one of the preceding claims,
wherein, as seen along a direction of rotation (Dr), the teeth belong to alternating ones of the first and second subsets.

8. A method of producing a saw blade (10), comprising:
providing a saw blade blank, comprising a circular blade base body (100) with radially extending teeth (101), said teeth being in an initial position,
in a bending step, bending at least some of the teeth, such that the teeth are plastically deformed, towards an axial direction of the saw blade blank, to final axial position (N),
whereby each tooth (101) is bent such that a plane (Pb) of the blade base body (100) and a plane of the tooth (Pt) meet at a bending angle (αs),
processing the blade base body (100) locally at an area of the bending angle by heating or mechanical impact.

9. The method as claimed in claim 8, wherein the processing is provided on an axial side of the saw blade blank, which faces opposite the axial direction towards which the tooth has been bent.
